# NEUE EUROPÄISCHE PATENTSCHRIFT

(11) **EP 0 896 184 B2**
(45) Veröffentlichungstag und Bekanntmachung des Hinweises auf die Entscheidung über den Einspruch: **02.01.2008**
(45) Hinweis auf die Patenterteilung: 14.11.2001
(21) Anmeldenummer: 98112994.3
(22) Anmeldetag: 13.07.1998
(51) Int. Cl.: F16L 59/02, F16L 59/14, F16L 57/00

(54) **Dämm-Ummantelung für Rohre**
Insulation covering for pipes
Revêtement isolant pour tuyaux

(30) Priorität: 14.07.1997 DE 19730153
(43) Veröffentlichungstag der Anmeldung: 10.02.1999
(73) Patentinhaber: E. Missel GmbH & Co., D-70374 Stuttgart (DE)
(72) Erfinder:
(74) Vertreter: Finsterwald, Manfred

(56) Entgegenhaltungen:
- EP-A- 0 766 035
- DE-A- 2 531 375
- DE-A- 2 900 924
- GB-A- 2 032 845
- GB-A- 2 281 859
- GB-A- 2 283 798
- US-A- 2 949 953
- US-A- 4 509 559
- US-A- 4 823 845
- US-A- 4 942 903

## Beschreibung

Die Erfindung betrifft eine Dämm-Ummantelung für Brandschutz-, Wärme- und Körperschalldämmung von Rohren, Kanälen, Armaturen und Anlagen nach der US-A-2,949,953.

Aus der US-A 4,942,903 sind Rohrleitungen und Rohrleitungsteile bekannt, die jeweils mit einer Dämm-Ummantelung fest ummantelt sind. Die Dämm-Ummantelung ist aus einer innenseitigen Isolationsschicht zur Wäremisolierung, einer feuerbeständigen Mittelschicht sowie einer diese umschließenden Schutzschicht gebildet und wird werkseitig durch Umwickeln der Rohrleitungen bzw. der Rohrleitungsteile an diesen unlösbar befestigt.
Aufgabe der Erfindung ist es, für insbesondere in der Sanitär-, Heizungs- und Klimatechnik verwendete Rohre, Kanäle, Armaturen und Anlagen, wie z.B. Ventilatoren und Heizkessel, eine mit bekannten Dämmhülsen und-formteilen kompatible, das heißt lückenlos anschließbare Dämm-Ummantelung zu schaffen, die einerseits unzulässige Körperschallübertragungen vom Rohr oder einer Anlage usw. zum Mauerwerk verhindert als auch die Wärmeübertragung zwischen Rohr bzw. Anlage usw. und der umgebenden Luft oder dem Mauerwerk verringert und andererseits im Brandfalle die Übertragung hoher Temperaturen vom Rohr bzw. der Anlage usw. zum Mauerwerk verringert und Feuer- und Rauchentwicklung bzw. Feuerdurchgang und Rauchübertragung in angrenzende Räume verhindert oder zumindest stark erschwert.

Zur Lösung dieser Aufgabe sind ausgehend von der eingangs definierten Dämm-Ummantelung die Merkmale des Anspruchs 1 vorgesehen. Bei dem Material, das zur Erzielung der geforderten Wärme- und Schalldämmung weich und formbar sein muß, handelt es sich beispielsweise um Material aus Keramikfaser, Mineralfaser, Steinwolle oder Glasfasern oder aus nichtbrennbaren Kunststoffen bzw. Materialgemischen.

Als Mittelschicht können auch mehrere, radial aufeinanderfolgende Lagen von unterschiedlichen temperatur- und / oder feuerbeständigen Materialien vorgesehen sein, und insbesondere ist es auch möglich, in dieser Mittelschicht zumindest eine Lage aus sich bei Hitzeeinwirkung aufblähendem Material vorzusehen, um im Brandfalle Durchführungen im Mauerwerk zusätzlich abdichtend zu verschließen.

Die Dicke der Mittelschicht beträgt vorzugsweise 1mm bis 200mm und wird in Abhängigkeit von den jeweils bestehenden Anforderungen gewählt, und es ist bei allen Dimensionierungen sicherzustellen, daß im Hinblick auf die geforderte Wärme-, Brandschutz- und Schalldämmung ein weiches und formbares Material vorliegt.

Die rohr- bzw. anlagenseitige oder innere Schicht bildet bevorzugt die Trägerschicht für die Mittelschicht und ist mit dieser Mittelschicht dauerhaft verbunden. Gleichzeitig muß diese innere Schicht gewährleisten, daß die Gleiteigenschaften der Dämm-Ummantelung bei der Montage auf ein Rohr bzw. eine Anlage günstig beeinflußt werden.

Die äußere Schicht besteht aus einem stabilen und/oder reißfesten Material, um die Dämmung vor Beschädigungen und Zerstörungen auf der Baustelle zu schützen. Vorzugsweise wird als äußere Schicht eine reißfeste Gittergewebefolie verwendet.

Durch die weiche, körperschalldämmende Mittelschicht ist ein lückenloses Ausgießen verbleibender Spalte zwischen Mauerwerk und der zu dämmenden Einrichtung mit Mörtel oder anderen feuerbeständigen Materialien möglich, wodurch sichergestellt werden kann, daß eine Brandausbreitung und Rauchübertragung bei verlegten Rohren, Armaturen, Kanälen oder Anlagenteilen verhindert wird.

Ein Ausführungsbeispiel der Erfindung wird unter Bezugnahme auf die Zeichnung näher erläutert; in der Zeichnung zeigt:
- Figur 1: eine perspektivische Darstellung einer Dämm-Ummantelung nach der Erfindung zur Erläuterung des generellen Aufbaus,
- Figur 2: eine perspektivische Darstellung der Dämm-Ummantelung nach Figur 1 in einer praktisch verwendbaren Ausführungsform mit Schnellverschluß,
- Figur 3: eine Darstellung einer Dämm-Ummantelung in Form einer Manschette, die an einem Rohrstück angelegt ist, und
- Figur 4: eine perspektivische Darstellung diverser Dämm-Formteile, die jeweils an Rohrstücke angelegt sind.

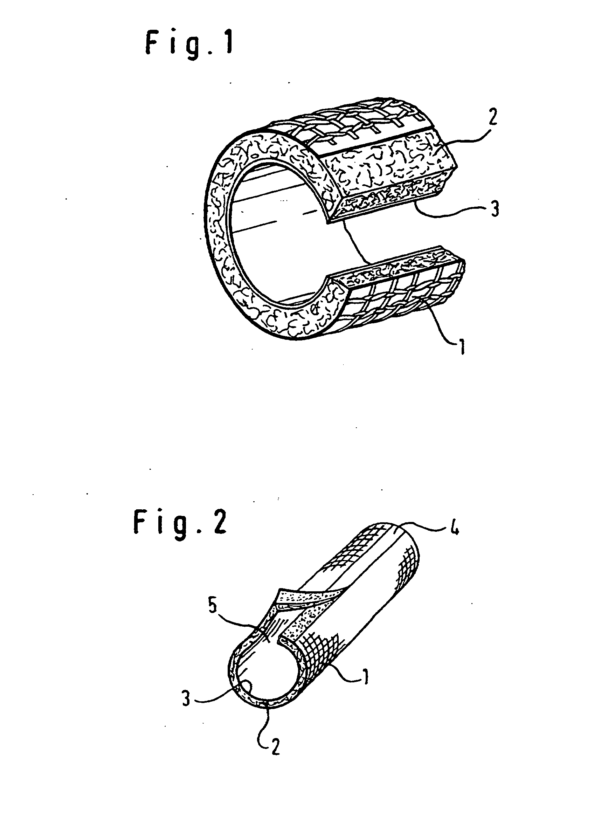

Nach Figur 1 besteht die Dämm-Ummantelung in ihrem schichtförmigen Aufbau aus einer Außenschicht 1 in Form einer reißfesten Gittergewebefolie, einer rohrseitigen Träger- und Gleitfolie 3 sowie einer dazwischen liegenden zumindest einlagigen Mittelschicht 2 aus nicht brennbarem Fasermaterial. Obwohl dieses nicht brennbare Fasermaterial, das beispielsweise aus Keramikfasern, Steinwolle, Mineralwolle oder Glasfasern bestehen kann, kompakt ausgeführt ist, muß es stets noch formbar und derart weich sein, daß ein mit dieser Dämm-Ummantelung ummanteltes Metallrohr hinsichtlich einer Körperschallübertragung vom Rohr zum Mauerwerk praktisch vollständig entkoppelt ist.

Für die reißfeste Gittergewebefolie 1 können das Gitter bildende Festigkeitsträger aus feuerbeständigem Material verwendet werden.

Für die innere, das heißt die rohrseitige Schicht 3 ist wesentlich, daß sie jegliche Beschädigung der Faserschicht 2 bei der Montage der Dämm-Ummantelung verhindert und gleichzeitig aufgrund ihrer Gleiteigenschaften die Montage günstig beeinflußt. Diese Trägerschicht 3 kann aus einem dicht gewebten, weichen, temperatur- und feuerbeständigen Material oder auch aus einer dünnen Folie aus Polyethylen oder Polypropylen oder einem beliebigen anderen Material bestehen, das die gestellten Anforderungen erfüllt.

Die Gesamtdicke aller Schichten liegt bevorzugt im Bereich zwischen 1 mm und 200 mm, wobei die geringen Dicken beispielsweise bei Abwasserrohren, Sanitär und Heizungsleitungen und Ventilatoren in Betracht kommen, während die größeren Dicken beispielsweise im Zusammenhang mit Hausdurchführungen oder Fernwärmeleitungen eingesetzt werden könnten.

Die Länge der jeweiligen Dämm-Ummantelung, die grundsätzlich auf eine beliebige ablängbar ist, richtet sich nach den jeweiligen Anforderungen bei der Rohr- oder Kanalverlegung bzw. der Anlageninstallation.

Figur 2 zeigt eine mögliche und bevorzugte Ausführungsform einer Brandschutz-Dämm-Manschette, die den im Zusammenhang mit Figur 1 geschilderten Aufbau besitzt und mit einem Längsschlitz 5 versehen ist, so daß eine Herstellung der Dämm-Manschette in Flächenform möglich ist und beim praktischen Einsatz aufgrund der Flexibilität des Gesamtaufbaus das flächige Material um das betreffende Rohr gelegt, dem Rohr formmäßig angepaßt und dann über eine Verschlußeinrichtung 4 als Rohrummantelung fixiert werden kann.

Als Verschlußeinrichtungen 4 eignen sich beispielsweise Schnellverschlüsse in Form von Klett- oder Klebverschlüssen, aber es ist auch ein Verschluß über Druckknöpfe, Haken und Ösen und dergleichen möglich. Diese Verschlüsse können beispielsweise aufgenäht, verklebt oder vernietet werden, wobei die reißfeste Außenschicht gewährleistet, daß ein stabiler und sicherer Gesamtverbund erhalten wird.

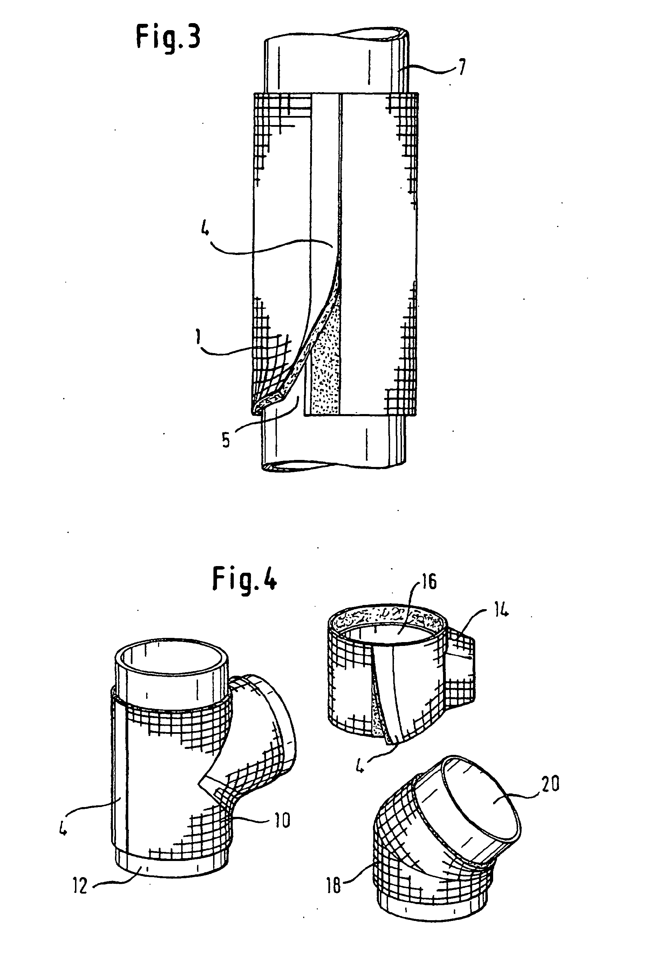

Figur 3 zeigt eine Dämm-Ummantelung in Form einer Dämm-Manschette ähnlich zu der Ausführungsform von Figur 2, die an eine Rohrleitung 7 angelegt ist. Der Aufbau dieser Dämm-Manschette gleicht demjenigen der Figuren 1 und 2. Auch hier ist ein Längsschlitz 5 vorgesehen, so daß die Dämm-Manschette an das Rohr 7 angelegt und mit Hilfe der Verschlußeinrichtung 4 verschlossen werden kann.

Figur 4 zeigt eine perspektivische Darstellung verschiedener Dämm-Ummantelungen, die als Formteile ausgebildet sind. Bei dem Dämm-Formteil 10 handelt es sich um eine Dämm-Ummantelung für einen Rohr-Abzweig 12. Auch dieses Dämm-Formteil 10 ist mit einer Verschlußeinrichtung 4 versehen.

Das in Figur 4 dargestellte Dämm-Formteil 14 dient zur Dämmung einer Rohrverbindung 16 und ist ebenfalls mit einer Verschlußeinrichtung 4 versehen.

Schließlich ist in Figur 4 ein Dämm-Formteil 18 dargestellt, das an einen Rohrbogen 20 angelegt ist.

Die Montage auf der Baustelle wird sowohl durch den Aufbau der Dämmanschette aus anschmiegsamem Material als auch durch werkseitig vorgefertigte Formteile erleichtert, wobei diese Formteile wiederum aus flachem Material hergestellt und ein- oder mehrteilig zu Abzweigungen, T-Stücken, Krümmungen, Ventilatorkasten-Formteilen, Armaturen, Anlagenteilen und dergleichen geformt werden können, wobei der Verschluß der Formteile analog zu den vorstehend erwähnten Verschlußmöglichkeiten im Zusammenhang mit der geraden Brandschutz-Dämm-Manschette erfolgen kann.

Ein weiterer Vorteil des erfindungsgemäßen Aufbaus liegt darin, daß er auch schwitzwasserdämmend ausgeführt werden kann. Dazu müssen die Materialien der inneren und/oder der äußeren Schicht wasser- und dampfdicht ausgeführt werden. Da die Manschette und die Formteile vor ihrer Montage in Flachform vorliegen, ergeben sich im Vergleich zu herkömmlichen Brandschutzummantelungen auch Lager- und Transportvorteile.

## Patentansprüche

1. Dämm-Ummantelung in Form eines ein- oder mehrteiligen Formteiles für Rohre, Kanäle, Armaturen und haustechnische Anlagen mit einer äußeren Schutzschicht (1), einer innenseitigen Gleitschicht (3), einer Mittelschicht (2) und einem in Axialrichtung verlaufenden, verschließbaren Trennschlitz (5), wobei
- die Mittelschicht (2) aus einem temperatur- und / oder feuerbeständigem Material besteht,
- das Material weich und formbar ist,
- die Dicke der Schicht (2) aus temperatur- und/oder feuerbeständigem Material zumindest 80 % der Gesamtdicke der Dämm-Ummantelung einnimmt,
- das Material wärme- und körperschalldämmend ausgebildet ist, und
- einzelne Abschnitte und/oder Kanten so vernäht sind, **daß** ein- oder mehrteilige Formteile entstehen und die Mittelschicht gleichzeitig allseitig verschlossen ist.

2. Dämm-Ummantelung nach Anspruch 1, **dadurch gekennzeichnet, daß** das temperatur- und / oder feuerbeständige Material aus Keramikfaser, Mineralfaser, Steinwolle, Glasfaser oder aus nichtbrennbaren Kunststoffen, nichtbrennbaren Materialien und Materialgemischen besteht.

3. Dämm-Ummantelung nach Anspruch 1 oder 2, **dadurch gekennzeichnet, daß** die Mittelschicht (2) aus mehreren Lagen von unterschiedlichen temperatur- und / oder feuerbeständigen Materialien besteht.

4. Dämm-Ummantelung nach einem der vorhergehenden Ansprüche, **dadurch gekennzeichnet, daß** die Mittelschicht (2) zumindest eine Lage aus sich bei Hitzeeinwirkung aufblähendem Material umfaßt.

5. Dämm-Ummantelung nach einem der vorhergehenden Ansprüche, **dadurch gekennzeichnet, daß** die innenseitige Gleitschicht (3) als Trägerschicht für die Mittelschicht (2) ausgebildet ist und aus einem flexiblen Material besteht.

6. Dämm-Ummantelung nach Anspruch 5, **dadurch gekennzeichnet, daß** die innenseitige Gleitschicht (3) aus einem feuerbeständigen Material besteht.

7. Dämm-Ummantelung nach Anspruch 5, **dadurch gekennzeichnet, daß** die innenseitige Gleitschicht (3) aus einer Folie, insbesondere aus PE oder PP besteht.

8. Dämm-Ummantelung nach einem der vorhergehenden Ansprüche, **dadurch gekennzeichnet, daß** die äußere Schutzschicht (1) aus einem robusten und/oder reißfesten Überzug, insbesondere aus einer Gewebefolie mit Gitterstruktur oder einer festen, aber flexiblen Kunststoffolie besteht.

9. Dämm-Ummantelung nach Anspruch 8, **dadurch gekennzeichnet, daß** die äußere Schutzschicht (1) aus einer Gittergewebefolie, insbesondere mit feuerbeständigen Festigkeitsträgern besteht.

10. Dämm-Ummantelung nach einem der vorhergehenden Ansprüche, **dadurch gekennzeichnet, daß** das Gittergewebe in die Folie integriert oder auf die Folie aufkaschiert oder eingeprägt ist.

11. Dämm-Ummantelung nach einem der vorhergehenden Ansprüche, **dadurch gekennzeichnet, daß** der Trennschlitz (5) mittels eines Klemm, Klett- oder Klebverschlusses (4), mittels Haken und Ösen oder mittels Druckknöpfen verschließbar ist.

12. Dämm-Ummantelung nach einem der vorhergehenden Ansprüche, **dadurch gekennzeichnet, daß** einzelne Abschnitte zu ein- oder mehrteiligen Bögen, Abzweigungen, T-Stücken und sonstigen Anlagenteilen zusammengefaßt sind.

## Claims

1. Insulating covering in the form of a one-piece or multi-piece shaped part for pipes, ducts, armatures and technical installations for buildings having an outer protective layer (1), an inner side sliding layer (3), a middle layer (2) and a closable parting slit (5) extending in the axial direction, wherein
- the middle layer (2) consists of a temperature and/or fire resistant material,
- the material is soft and formable,
- the thickness of the layer (2) of temperature and/or fire resistant material takes up at least 80% of the total thickness of the insulating covering,
- the material is thermally insulating and insulates against structure-borne noise, and
- individual sections and/or edges are seamed such that one-piece or multi-piece shaped parts arise and the middle layer is simultaneously closed off on all sides.

2. Insulating covering in accordance with claim 1,
**characterised,**
**in that** the temperature and/or fire resistant material consists of ceramic fibres, mineral fibres, rockwool, glass fibres or non-combustible plastics, non-combustible materials and material mixtures.

3. Insulating covering in accordance with claim 1 or claim 2,
**characterised,**
**in that** the middle layer (2) consists of a plurality of layers of different temperature and/or fire resistant materials.

4. Insulating covering in accordance with one of the preceding claims,
**characterised,**
**in that** the middle layer (2) includes at least one layer of a material which puffs up under the action of heat.

5. Insulating covering in accordance with one of the preceding claims,
**characterised,**
**in that** the inner side sliding layer (3) is formed as a carrier layer for the middle layer (2) and consists of a flexible material.

6. Insulating covering in accordance with claim 5,
**characterised,**
**in that** the inner slide sliding layer (3) consists of a fire resistant material.

7. Insulating covering in accordance with claim 5,
**characterised,**
**in that** the inner side sliding layer (3) consists of a foil, in particular of PE or PP.

8. Insulating covering in accordance with one of the preceding claims,
**characterised,**
**in that** the outer protective layer (1) consists of a robust and/or tear resistant covering, in particular of a fabric reinforced foil with a grid structure or of solid, but flexible plastic foil.

9. Insulating covering in accordance with claim 8,
**characterised,**
**in that** the outer protective layer (1) consists of a foil reinforced by a fabric grid, in particular with fire resistant, strength-giving supporting members.

10. Insulating covering in accordance with one of the preceding claims,
**characterised,**
**in that** the fabric grid is integrated into the foil or is laminated onto the foil or is impressed into the foil.

11. Insulating covering in accordance with one of the preceding claims,
**characterised,**
**in that** the partition slit (5) can be closed by means of a clamped closure, an adhesive closure (84) or a closure of the loop and hook type, by means of hooks and eyes or by means of snap fasteners.

12. Insulating covering in accordance with one of the preceding claims,
**characterised,**
**in that** individual sections are combined together into one-piece or multi-piece bends, branches, T-pieces and other installation parts.

## Revendications

1. Gaine d'isolation sous la forme d'une pièce préformée en une ou plusieurs parties, destinée à des tubes, des conduits, de la tuyauterie et des installations domotiques, comportant une couche de protection extérieure (1), une couche de glissement intérieure (3), une couche médiane (2) et une fente de séparation (5) orientée dans la direction axiale, et susceptible d'être obturée,
- la couche médiane (2) étant en un matériau résistant à la température et/ou réfractaire,
- le matériau étant souple et déformable,
- l'épaisseur de la couche (2) en matériau résistant à la température et/ou réfractaire étant au moins égale à 80 % de l'épaisseur totale de la gaine d'isolation,
- le matériau étant conçu pour isoler de la chaleur et du bruit de structure, et
- des tronçons individuels et/ou bords étant cousus de manière à obtenir des pièces préformées en une ou plusieurs parties, et à obturer simultanément la couche médiane de tous côtés.

2. Gaine d'isolation selon la revendication 1,
**caractérisée en ce que** le matériau résistant à la température et/ou réfractaire est constitué de fibres céramiques, de fibres minérales, de laine minérale, de fibres de verre ou de matières plastiques ininflammables, de matériaux ininflammables et de mélanges de tels matériaux.

3. Gaine d'isolation selon la revendication 1 ou 2, **caractérisée en ce que** la couche médiane (2) est constituée de plusieurs couches en différents matériaux résistants à la température et/ou réfractaires.

4. Gaine d'isolation selon l'une des revendications précédentes, **caractérisée en ce que** la couche médiane (2) comprend au moins une couche en un matériau qui gonfle sous l'effet de la chaleur.

5. Gaine d'isolation selon l'une des revendications précédentes, **caractérisée en ce que** la couche de glissement intérieure (3) est conçue en tant que couche de support pour la couche médiane (2), et est constituée d'un matériau flexible.

6. Gaine d'isolation selon la revendication 5, **caractérisée en ce que** la couche de glissement intérieure (3) est en un matériau réfractaire.

7. Gaine d'isolation selon la revendication 5, **caractérisée en ce que** la couche de glissement intérieure (3) est constituée d'un film, notamment d'un film en polyéthylène (PE) ou en polypropylène (PP).

8. Gaine d'isolation selon l'une des revendications précédentes, **caractérisée en ce que** la couche de protection extérieure (1) est constituée d'un revêtement robuste et/ou résistant à la traction, notamment d'un film textile avec une structure en treillis ou d'un film de matière plastique résistante, mais flexible.

9. Gaine d'isolation selon la revendication 8, **caractérisée en ce que** la couche de protection extérieure (1) est constituée d'un film textile à structure en treillis, comportant notamment des supports de résistance réfractaires.

10. Gaine d'isolation selon l'une des revendications précédentes, **caractérisée en ce que** le textile à structure en forme de treillis est intégré dans le film ou est plaqué sur le film ou incrusté dans le film.

11. Gaine d'isolation selon l'une des revendications précédentes, **caractérisée en ce que** la fente de séparation (5) peut être obturée au moyen d'une fermeture à pince, auto-agrippante ou collée (4), au moyen de crochets et de boucles ou au moyen de boutons à pression.

12. Gaine d'isolation selon l'une des revendications précédentes, **caractérisée en ce que** des tronçons individuels sont assemblés sous forme de coudes en une ou plusieurs parties, de dérivations, de pièces en T et d'autres pièces d'installation.
